Europäisches Patentamt

European Patent Office

Office européen des brevets

(19)

(11) Veröffentlichungsnummer: **0 198 253 B1**

# (12) EUROPÄISCHE PATENTSCHRIFT

(45) Veröffentlichungstag der Patentschrift: **11.12.91**

(51) Int. Cl.⁵: **G01S 17/46**, G01C 3/10

(21) Anmeldenummer: **86103649.9**

(22) Anmeldetag: **18.03.86**

(54) Lichttaster.

(30) Priorität: **16.04.85 DE 3513671**

(43) Veröffentlichungstag der Anmeldung:
**22.10.86 Patentblatt 86/43**

(45) Bekanntmachung des Hinweises auf die
Patenterteilung:
**11.12.91 Patentblatt 91/50**

(84) Benannte Vertragsstaaten:
**BE CH DE FR GB IT LI NL SE**

(56) Entgegenhaltungen:
| | |
|---|---|
| EP-A- 0 016 969 | EP-A- 0 061 937 |
| DE-A- 2 443 673 | DE-A- 2 811 413 |
| DE-A- 3 004 691 | FR-A- 2 429 442 |
| GB-A- 2 046 551 | US-A- 4 162 124 |

(73) Patentinhaber: **Erwin Sick GmbH Optik-
Elektronik
Sebastian-Kneipp-Strasse 1
W-7808 Waldkirch(DE)**

(72) Erfinder: **Haas, Klaus Dieter
Schauinslandstrasse 6
W-7830 Emmendingen(DE)**
Erfinder: **Meinert, Thomas
Wiesenstrasse 78
W-7830 Emmendingen(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

**Beschreibung**

Die Erfindung betrifft einen entfernungssensitiven Lichttaster nach dem Oberbegriff des Patentanspruchs 1.

Lichttaster dienen dazu, in einem vorbestimmten Abstand befindliche, z.B. vorbeigeführte, lichtreflektierende Gegenstände zu erkennen. Hierfür ist es jedoch erforderlich, daß sich Sende- und Empfangsstrahl an dem Ort des zu erkennenden Gegenstands schneiden. Um einen Lichttaster mit definiert einstellbarem Tastbereich zu schaffen, ist es bereits bekannt geworden (DE-OS 28 11 413, 30 14 691, 29 24 685), den Winkel von Sende- und/oder Empfangsstrahl derart zu verändern, so daß der Schnittpunkt der beiden Strahlen mehr oder weniger weit vom Gehäuse entfernt liegt und so ein beliebiger Tastabstand innerhalb eines vorbestimmten Bereiches voreingestellt werden kann.

Aus der EP-A-0 061 937 ist ein Lichttaster bekannt, bei dem in einem Gehäuse ein Lichtsender neben einem Lichtempfänger angeordnet ist. Der Lichtsender besteht aus einer schwenkbar im Gehäuse gelagerten Lichtquelle und einer zugeordneten gehäusefesten Frontlinse, während der gehäusefeste Lichtempfänger eine Frontlinse und einen Photodetektor umfaßt.

Durch Verschwenken der Lichtquelle läßt sich der Winkel, unter dem der Sendestrahl relativ zum Empfangsstrahl ausgesandt wird, einstellen, um unterschiedliche Tastabstände zu realisieren.

Nachteilig bei bekannten Lichttastern dieser Art ist es, daß die Lichtquelle und/oder die photoelektrische Wandleranordnung verschwenkbar im Gehäuse angeordnet werden müssen, was insbesondere wegen der elektrischen Leitungszuführungen zu diesen Elementen nachteilig ist, ganz abgesehen von den Justierproblemen.

Es ist bereits ein entfernungssensitiver Lichttaster bekannt (DE-PS 29 24 685), der in einem Gehäuse einen Lichtsender und einen Lichtempfänger mit jeweils zugehöriger Abbildungsoptik enthält. Die optischen Achsen der Lichtsender- und Empfängeroptik schneiden sich in einer Entfernung von dem Gehäuse, die zur Vorgabe des Tastbereiches verstellbar ist. Hierzu sind die jeweils mit einer Optik kombinierten Lichtsender und Lichtempfänger in je einer Schwenkhalterung untergebracht. Die Halterungen werden mittels eines Spindeltriebs verschwenkt, wobei sich der Winkel ändert, unter dem sich die Achsen der Optiken schneiden.

Die bekannte Anordnung von Lichtsender, Lichtempfänger und den zugehörigen optischen Bauelementen auf schwenkbaren Haltern ist apparativ aufwendig, umständlich zu montieren und während des Betriebs wenig stabil. Die elektrische Leitungsführung muß darauf ausgelegt sein, die für die Schwenkbewegung erforderlichen Freiheiten zu lassen, so daß für die Verkabelung besondere Maßnahmen getroffen werden müssen und die Leitungen nicht fest verlegt werden können.

Weiter ist es bekannt (DE-OS 24 43 673), hinter der Empfangsfrontlinse eines optischen Entfernungsmessers einen Schwingspiegel anzubringen, der den von einem Objekt zurückgestreuten Lichtstrahl über eine vor einem Photoempfänger angeordnete Lochblende periodisch hin- und herstreichen läßt. Je nach Entfernung des das Sendelicht zurückstreuenden Objektes von diesem Entfernungsmesser erreicht das vom Photoempfänger abgegebene elektrische Signal bei unterschiedlichen Positionen des Schwingspiegels ein Maximum. Dieser Effekt kann zur Entfernungsmessung und zur entsprechenden Einstellung eines Objektivs ausgenutzt werden. Der Schwingspiegel befindet sich bei diesem Gerät in ständiger Bewegung, was besonders bei im Dauerbetrieb arbeitenden Entfernungsmessern zu Abnutzungserscheinungen und einer Veränderung der Meßgenauigkeit führen kann.

Das Ziel der vorliegenden Erfindung besteht darin, einen entfernungssensitiven Lichttaster der eingangs genannten Gattung zu schaffen, mit dem bei einer im Betrieb stationären Anordnung der optischen Bauelemente innerhalb eines bestimmten Maximal-abstandes vom Gehäuse befindliche Gegenstände erkannt werden können, während Gegenstände, die weiter als dieser Maximal-abstand vom Gehäuse entfernt sind, nicht erkannt werden sollen.

Zur Lösung dieser Aufgabe sind die Merkmale des Patentanspruchs 1 vorgesehen.

Mit Hilfe der Erfindung können also innerhalb eines vorgegebenen Grenzabstandes befindliche Gegenstände sicher erkannt werden, wobei vor der Messung der Grenzabstand nur durch Verstellung des Umlenkspiegels und ohne die Bewegung photoelektronischer Bauelemente eingestellt werden kann.

Bevorzugte Ausführungsformen der Erfindung sind in den abhängigen Ansprüchen definiert.

Die Erfindung wird im folgenden beispielsweise anhand der Zeichnung beschrieben; in dieser zeigt:

Fig. 1     eine schematische Seitenansicht eines erfindungsgemäßen Lichttasters mit dem zugeordneten Strahlengang,

Fig. 2     eine teilweise geschnittene Seitenansicht einer baulichen Verwirklichung des erfindungsgemäßen Lichttasters und

Fig. 3     einen Schnitt nach Linie III - III in Fig. 2.

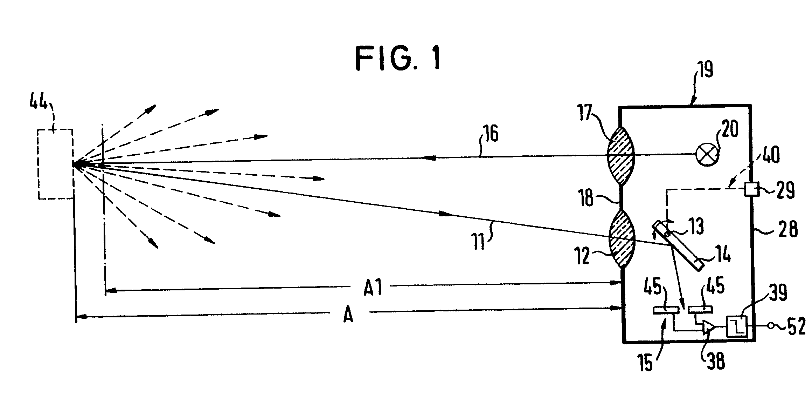

Nach Fig. 1 sind in der Vorderwand 18 eines quaderförmigen, senkrecht zur zeichnungsebene der Fig. 1 flachen Gehäuses 19 übereinander in geringem Abstand eine Empfangsfrontlinse 12 und eine Sendefrontlinse 17 angeordnet. Im Brennpunkt der Sendefrontlinse 17 befindet sich eine Lumineszenzdiode 20 als Lichtquelle, so daß aus der Sendefrontlinse 17 senkrecht zur Frontwand 18 des Gehäuses 19 ein scharf gebündelter Sendestrahl 16 austritt. In einem Grenzabstand A von der Frontwand 18 des Gehäuses 19 sei ein lichtreflektierender Gegenstand 44 angeordnet, der das auftreffende Licht des Sendestrahls 16 im Sinne der gestrichelten Pfeile innerhalb eines vom Material abhängigen Streukegels reflektiert. Ein enger Ausschnitt dieses Streukegels, und zwar der Empfangsstrahl 11 wird von der Empfangsfrontlinse 12 aufgenommen und über einen dahinter angeordneten Umlenkspiegel 14 zu einer fotoelektrischen Wandleranordnung 15 reflektiert, die im unteren Bereich des Gehäuses 19 angeordnet ist und nach Fig. 1 aus zwei unmittelbar hintereinander angeordneten Fotowandlern 45 besteht, die an einen Differenzverstärker 38 angeschlossen sind, so daß am Ausgang des Differenzverstärkers 38 ein der Differenz des Lichtstromes auf den beiden Fotowandlern 45 entsprechendes Signal ansteht.

Befindet sich nach Fig. 1 ein Gegenstand 44 im Grenzabstand A vom Gehäuse 19, d.h. in dem Abstand, ab dem spätestens der Gegenstand 44 vom Lichttaster nicht mehr detektiert wird, so fällt der Empfangsstrahl 11 genau in die Mitte zwischen den beiden Photowandlern 45. Bei dieser in Fig. 1 dargestellten Mittelposition des Empfangsstrahls entsteht am Ausgang des Differenzverstärkers 38 das Signal Null. Das gleiche Signal am Ausgang des Differenzverstärkers 38 würde auch bei einem nicht anwesenden Gegenstand auftreten.

Um nun zu unterscheiden zwischen den Zuständen "Gegenstand im Tastbereich" und "Gegenstand außerhalb des Tastbereiches" ist das Ausgangssignal des Differenzverstärkers 38 an eine Auswerteschaltung 39 angelegt, in der es bezüglich Amplitude und Vorzeichen bewertet wird. Wird das Signal z.B. positiv und erreicht es eine in der Auswerteschaltung 39 vorgesehene Ansprechschwelle, bedeutet das "Gegenstand im Tastbereich". Wird das Signal dagegen negativ, heißt das "Gegenstand außerhalb des Tastbereiches".

Sofern nach der bevorzugten Ausführungsform eine Ansprechschwelle innerhalb der Auswerteschaltung 39 vorgesehen ist, würde der Gegenstand 44 nicht schon bei einer beliebig kleinen Verschiebung in Richtung des Gehäuses 19 zu einem Anwesenheitssignal am Ausgang 52 der Auswerteschaltung 39 führen, sondern beispielsweise erst dann, wenn der Gegenstand 44 sich in einem deutlich kleineren Abstand A1 vom Gehäuse 19 entfernt befindet.

Der Umlenkspiegel 14 ist um eine senkrecht auf der Zeichnungsebene der Fig. 1 stehende Drehachse 13 im Sinne des Doppelpfeils verschwenkbar. Die Verschwenkung kann durch Verdrehen eines von der Rückwand 28 her zugänglichen Betätigungsknopfes 29 erfolgen, welcher über ein geeignetes Getriebe 40 mit dem verschwenkbaren Umlenkspiegel 14 verbunden ist.

Je nach dem Abstand A, in dem ein Gegenstand 44 zur Anzeige gebracht werden soll, wird der Umlenkspiegel 14 auf einen anderen Winkel eingestellt, so daß der Schnittpunkt des Empfangsstrahles 11 mit dem Sendestrahl 16 sich am Ort des Gegenstandes 44 befindet. So kann erreicht werden, daß für jeden gewünschten Tastbereich der Empfangsstrahl 11 auf die gewünschte Mittelposition der fotoelektrischen Wandleranordnung 15 fällt.

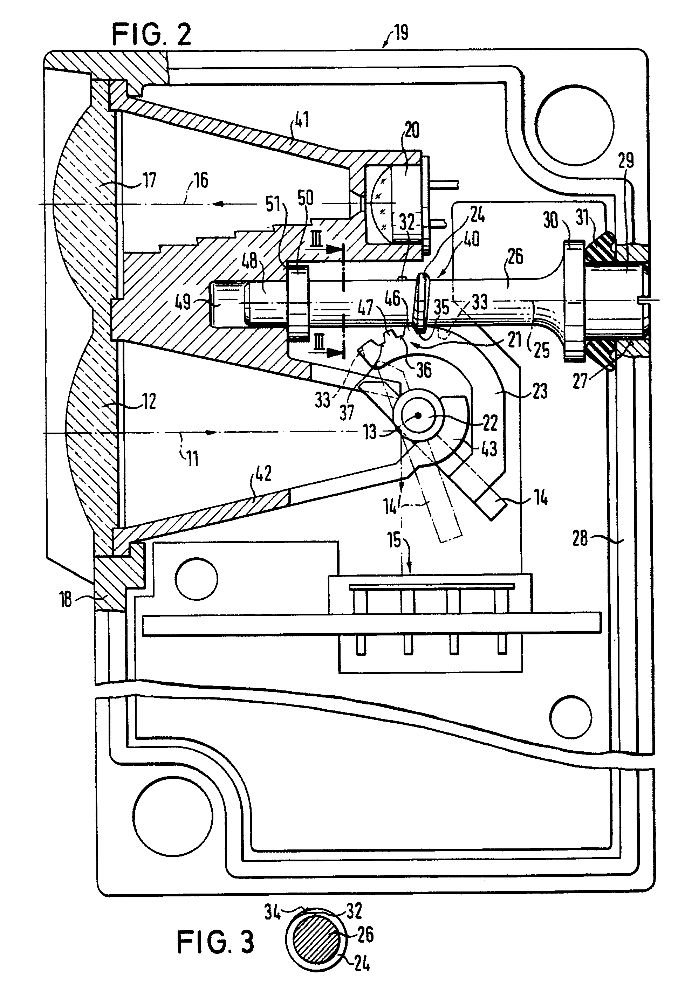

In den Fig. 2 und 3 bezeichnen gleiche Bezugszahlen entsprechende Teile wie in Fig. 1.

Nach Fig. 2 ist die die Lichtquelle darstellende Fotodiode 20 in einem sich trichterartig nach außen erweiternden Optikkonus 41 angebracht, im Bereich von dessen größtem Querschnitt sich die Sendefrontlinse 17 befindet. Der Raum zwischen der Fotodiode 20 und der Sendefrontlinse 17 ist hermetisch abgedichtet, so daß es hier zu keinerlei Verschmutzungen kommen kann. Die Fotodiode 20 ist relativ zur Sendefrontlinse 17 und zum Gehäuse 19 einwandfrei justiert fest angeordnet.

Hinter der Empfangsfrontlinse 12 befindet sich ein entsprechender Optikkonus 42, welcher jedoch im hinteren Bereich derart offen ausgebildet ist, daß dort der Umlenkspiegel 14 mit dem erforderlichen Schwenkbereich angeordnet werden kann. An den beiden Seiten weist der Umlenkspiegel 14 Zapfen 22 auf, mittels denen er in einer gehäusefesten Lagerung 43 drehgelagert ist.

Im unteren Bereich des Umlenkspiegels 14 ist ein Bügel 23 befestigt, welcher sich auf einer annähernden Kreisbahn um die Drehachse 13 herum nach oben bis deutlich oberhalb der Drehachse 13 erstreckt, wo er in ein Zahnsegment 21 übergeht, das radial außen drei Zahnlücken 35, 36, 37 besitzt. Zwischen den Zahnlücken befinden sich zwei Zähne 46, 47, während in Umfangsrichtung außerhalb der Zahnlücken 35, 37 das massive Material des Zahnsegments 21 sich mit einer radialen Ausdehnung entsprechend den Zähnen 46, 47 noch um ein Stück erstreckt, welches größer ist, als die Breite eines der Zähne 46, 47.

In die Zahnlücken 35, 36, 37 des Zahnsegments 21 greift von oben eine Schnecke 24 ein, die auf einer um eine Längsachse 25 drehbaren Schneckenwelle 26 ausgebildet ist. Die Schnecke 24 ist so kurz ausgebildet, daß sie sich nur um etwas mehr als einen Gang um die Schneckenwelle 26 herum erstreckt. An ihren beiden Enden sind als Anschläge dienende Endflächen 32 (siehe auch Fig. 3) vorgesehen.

An ihrem rückwärtigen Ende weist die Schnekkenwelle 26 den mit einem Querschlitz versehenen Betätigungsknopf 29 auf, der sich durch eine Öffnung 27 in der Rückwand 28 des Gehäuses 19 hindurch erstreckt, so daß er von außen beispielsweise mittels eines Schraubenziehers erreichbar ist.

In geringem Abstand von der Rückwand 28 weist die Schneckenwelle 26 im Inneren des Gehäuses 19 einen Umfangsflansch 30 auf, zwischen dem und der Rückwand 28 eine Ringdichtung 31 klemmend angeordnet ist.

Nach Fig. 3 ist die Schnecke 24 in Richtung auf die Endflächen 32 zu etwas abgeflacht.

Mit ihrem vorderen Ende ist die Schneckenwelle 26 mittels eines Drehzapfens 48 in einer Längsbohrung 49 drehgelagert, welche zwischen Sende- und Empfangsteil im Material des Gehäuses vorgesehen ist. Ein an einer Ringstufe 51 des Gehäuses 19 anstoßender Umfangsflansch 50 im vorderen Bereich der Schneckenwelle 26 sichert eine einwandfreie axiale Fixierung der Schneckenwelle 26, welche für eine einwandfreie Beibehaltung einer einmal eingestellten Schwenkposition des Umlenkspiegels 14 wichtig ist. Die Ringdichtung 31 ist derart federnd ausgebildet, daß sie den Umfangsflansch 50 in Längsrichtung gegen die Ringstufe 51 federnd andrückt.

Auch die hierbei auftretende Reibung ist von Bedeutung, weil so verhindert wird, daß eine einmal gefundene Dreheinstellung der Schneckenwelle 26 beispielsweise durch Erschütterungen in unerwünschter Weise verändert wird.

Die relative Anordnung der Schneckenwelle 26 und des Zahnsegments 21 bzw. der Zapfen 22 und der Lagerung 43 ist derart, daß die Schnecke 24 in Fig. 2 nach unten einen geringfügigen Druck auf den Bügel 23 ausübt, so daß die Zapfen 22 nach unten in die Lagerung 43 hineingedrückt werden. Um hierbei keine zu starken Verspannungskräfte zu erzeugen, ist der Bügel 23 etwas federnd ausgebildet, so daß ein genau definierter federnder Andruck zwischen den miteinander verbundenen Bauteilen vorliegt. Hierdurch ist zum einen Spielfreiheit gewährleistet, während zum anderen zwischen den gegeneinander verschieblichen Bauteilen eine erhöhte Reibung erzeugt wird, die eine selbsttätige unerwünschte Verstellung einer einmal eingestellten Drehposition verhindert.

Die Arbeitsweise des beschriebenen Lichttasters ist wie folgt:
Zur Einstellung auf den gewünschten Grenzabstand A des Tastbereichs vom Gehäuse 19 wird ein Testgegenstand an den Ort des Gegenstandes 44 gebracht, worauf der Betätigungsknopf 29 der Schneckenwelle 26 in der einen oder anderen Drehrichtung solange verdreht wird, bis zunächst die aus Fig. 1 ersichtliche Mittelposition des Empfangsstrahles 11 erzielt und am Ausgang des Differenzverstärkers 38 bzw. der Auswerteschaltung 39 das Signal Null ansteht. Anschließend wird dann der Umlenkspiegel 14 mittels des Betätigungsknopfes 29 in der Richtung, daß der hintere der beiden Photowandler 45 stärker beaufschlagt wird, so lange gedreht, bis am Ausgang 52 der Auswerteschaltung 39 gerade eben ein Anwesenheitssignal erscheint, d.h., daß die Ansprechschwelle gerade überschritten wurde. Diese Position (z.B. 14') bleibt nach der betreffenden Einstellung aufgrund der erfindungsgemäß vorgesehenen Reibungskräfte zwischen den verschiedenen drehbaren Elementen nunmehr aufrecht erhalten.

Das Ende des Schwenkbereiches des Zahnsegments 21 wird dadurch bestimmt, daß eine der Endflächen 32 an die entsprechende Gegenfläche 33 des Zahnsegments 21 anstößt, wenn die Grenze des Schwenkbereichs erreicht ist. Um in diesem Falle bei einem gewaltsamen Weiterdrehen des Betätigungskopfes 29 eine Beschädigung des Zahnsegments 21 zu vermeiden, ist die Abschrägung 34 im Bereich der Endflächen 32 so ausgebildet, daß bei Ausübung eines zu starken Drehmomentes auf den Betätigungskopf 29 die Schnecke 34 unter federnder Auslenkung der Schneckenwelle 26 und/oder des Bügels 23 über den Rand des Zahnsegments 21 schnappt, worauf jetzt die Schnecke 24 ohne einen Drehantrieb des Zahnsegments 21 auf dessen Rand gleitet, bis sie schließlich erneut in die erste Zahnlücke 35 bzw. 37 einschnappt, aus der sie beim Auflaufen der Abschrägung 34 auf den Rand des Zahnsegments 21 federnd herausgehoben worden war. So wird auf einfache Weise eine jede Beschädigung der empfindlichen Bauteile vermeidende Drehmomentbegrenzung erzielt.

**Patentansprüche**

1. Entfernungssensitiver Lichttaster zur Feststellung der Anwesenheit eines Meßobjekts (44) innerhalb eines Maximalabstands (A1) vom Lichttaster, mit einem Gehäuse (19), in dem ein eine gehäusefeste Lichtquelle (20) und eine gehäusefeste Sendefrontlinse (17) enthaltender Lichtsender und ein eine gehäusefeste photoelektrische Wandleranordnung (15) sowie eine gehäusefeste Empfangsfrontlinse (12) enthaltender Lichtempfänger nebeneinander so angeordnet sind, daß ein vom Lichtsender emittierter gebündelter Sendestrahl (16) als ein raumwinkelmäßig eng begrenzter Empfangsstrahl (11) zum Lichtempfänger reflektiert wird, wenn sich ein Meßobjekt im Sendestrahl befindet, mit einem in dem Gehäuse entweder vor der Sendefrontlinse (17) oder hinter der Empfangsfrontlinse (12) angeordneten, um eine Achse (13) schwenkbaren Umlenkspiegel (14), der Licht der im erstgenannten Fall seitlich zur optischen Achse der Sendefrontlinse angeordneten Lichtquelle zur Sendefrontlinse bzw. durch die Empfangsfrontlinse einfallendes Licht auf die im letztgenannten Fall seitlich der optischen Achse der Empfangsfrontlinse liegende Wandleranordnung lenkt, und mit einer an die Wandleranordnung angeschlossenen Signalverarbeitungsschaltung (38,39), dadurch gekennzeichnet, daß

Einrichtungen (21,23,29,31,40) zur Fixierung des Umlenkspiegels (14) in einer wählbaren Schwenkstellung vorgesehen sind, und die photoelektrische Wandleranordnung (15) zwei Photowandler (45) aufweist, die hintereinander entlang eines bei Schwenkung des Umlenkspiegels vom Empfangsstrahl durchlaufenen Winkelbereichs angeordnet und jeweils mit einem Eingang eines in der Signalverarbeitungsschaltung enthaltenen Differenzverstärkers (38) verbunden sind, und

der Umlenkspiegel in einer Schwenkstellung fixiert ist, bei der das Ausgangssignal des Differenzverstärkers

(i) eine vorgegebene Amplitude einer ersten Polarität aufweist, wenn sich das Meßobjekt innerhalb des Maximalabstands (A1) befindet, bzw.

(ii) Null ist, wenn sich das Meßobjekt in einem sich jenseits des Maximalabstands (A1) liegenden Grenzabstand (A) befindet, bzw.

(iii)eine der ersten Polarität entgegengesetzte Polarität annimmt, wenn sich das Meßobjekt jenseits des Grenzabstands (A) befindet.

2. Lichttaster nach Anspruch 1, dadurch **gekennzeichnet**, daß der Differenzverstärker (38) an eine Auswerteschaltung (39) angeschlossen ist, die eine Ansprechschwelle enthält, derart, daß ein Anwesenheitssignal erst abgegeben wird, wenn das das richtige Vorzeichen aufweisende Signal am Ausgang des Differenzverstärkers (38) deutlich von Null verschieden ist.

3. Lichttaster nach Anspruch 1, dadurch **gekennzeichnet**, daß der Sendestrahl (16) feststehend ist, wobei der Sendestrahl (16) senkrecht zu der die Sendefrontlinse (17) enthaltenden Wand (18) aus dem Gehäuse (19) austritt.

4. Lichttaster nach einem der vorhergehenden Ansprüche, dadurch **gekennzeichnet**, daß die Lichtquelle (20) eine Lumineszenzdiode ist und in der Brennebene der Sendefrontlinse (17) und die (15) in der Brennebene der Empfangsfrontlinse (12) angeordnet ist.

5. Lichttaster nach einem der vorhergehenden Ansprüche, dadurch **gekennzeichnet**, daß die Drehachse (13) des Umlenkspiegels (14) senkrecht zu der vom Empfangs- und Sendestrahl (11, 16) definierten Ebene verläuft.

6. Lichttaster nach einem der vorhergehenden Ansprüche, dadurch **gekennzeichnet**, daß die photoelektrische Wandleranordnung (15) auf der von der Lichtquelle (20) abgewandten Seite des Umlenkspiegels (14) angeordnet ist.

7. Lichttaster nach einem der vorhergehenden Ansprüche, dadurch **gekennzeichnet**, daß der Umlenkspiegel (14) einen auf einen Winkel von 20 bis 30° begrenzten Schwenkbereich besitzt.

8. Lichttaster nach einem der vorhergehenden Ansprüche, dadurch **gekennzeichnet**, daß der Umlenkspiegel (14) über einen Schnecken-Zahnradtrieb (23, 24) verstellbar ist.

9. Lichttaster nach Anspruch 8, dadurch **gekennzeichnet**, daß der Umlenkspiegel (14) an einem mit der Drehachse (13) koaxialen Zahnsegment (21) angebracht und über zwei seitliche Zapfen (22) am Gehäuse (19) drehgelagert ist.

10. Lichttaster nach Anspruch 9, dadurch **gekennzeichnet**, daß das Zahnsegment (21) über einen federnd vorgespannten Bügel (23) mit dem Umlenkspiegel (14) verbunden ist, derart, daß die Zapfen (22) von der Schnecke (24) gegen die Lagerung (43) gedrückt werden.

11. Lichttaster nach einem der Ansprüche 9 oder 10, dadurch **gekennzeichnet**, daß das Zahnsegment (21) auf der der Lichtquelle (20) Zugewandten Seite der Drehachse (13) liegt.

12. Lichttaster nach Anspruch 11, dadurch **gekennzeichnet**, daß die Schnecke (24) zwischen der Drehachse (13) und der Lichtquelle (20) mit parallel zu den optischen Achsen der Frontlinsen (12, 17) verlaufender Schneckendrehachse (25) angeordnet ist.

13. Lichttaster nach Anspruch 12, dadurch **gekennzeichnet**, daß die Schnecke (24) auf einer drehbar im Gehäuse (19) gelagerten Schneckenwelle (26) angeordnet ist, die einen durch eine Öffnung (27) in der Rückwand (28) des Gehäuses (19) hindurch verdrehbaren Betätigungskopf (29) aufweist.

14. Lichttaster nach Anspruch 13, dadurch **gekennzeichnet**, daß zwischen Umfangsflansch (30) der Schneckenwelle (26) und der Innenoberfläche der Rückwand (28) eine Ringdichtung (31) klemmend angeordnet ist.

15. Lichttaster nach einem der Ansprüche 8 bis 14, dadurch **gekennzeichnet, daß die** Schnecke (24) zwischen ein und zwei Gängen aufweist und daß die von der Schneckenwelle (26) radial vorstehenden Endflächen (32) mit im Anschluß an den gezahnten Bereich des Zahnsegmentes (21) vorgesehenen Gegenflächen (33) zur Begrenzung des Schwenkwinkels des Zahnsegments (21) zusammenwirken.

16. Lichttaster nach einem der Ansprüche 8 bis 15, dadurch **gekennzeichnet, daß die Gänge** der Schnecke (24) in den beiden Endbereichen in Umfangstrichtung zum Ende hin eine Abschrägung (34) aufweisen, derart, daß beim Anstoßen der zugeordneten Endfläche (32) an die Gegenfläche (33) und Anwendung eines die Gefahr einer Beschädigung mit sich bringenden größeren Drehmomentes an der Schneckenwelle (26) die Schnecke (24) im Bereich der betreffenden Endfläche (32) über den Außenrand der Gegenfläche (33) schnappen kann, worauf die Schnecke (24) sich ohne Verdrehung des Zahnsegmentes (21) verdreht, bis sie in die erste benachbarte Zahnlücke (35 bzw. 37) einfällt.

17. Lichttaster nach einem der Ansprüche 8 bis 16, dadurch **gekennzeichnet**, daß der Steigungswinkel der Schnecke (24) zwischen 4° und 6° und vorzugsweise bei 5° liegt und daß das Zahnsegment (21) drei benachbarte Zahnlücken (35, 36, 37) aufweist.

**Claims**

1. A distance sensitive light sensor for determining the presence of an article (44) within a maximal, distance (A1) from the light sensor, comprising a housing (19) in which are arranged next to each other a light transmitter including a housing-fixed light source (20) and a housing-fixed transmitter front lens (17), and light sensor including a housing-fixed photoelectric converter arrangement (15) and a housing-fixed receiver front lens (12), in such a manner that a transmitted beam (16) transmitted by the light transmitter is reflected towards the light receiver as a reception beam (11) in a narrow spatial angle if an article is placed in the transmitted beam, comprising a deflecting mirror (14) pivotably mounted about an axis (13) in the housing either before the transmitter front lens (17) or behind the receiver front lens (12), the deflecting mirror (14) deflecting the light from the light source, arranged in the former case laterally with respect to the optical axis of the transmitter front lens, towards the transmitter front lens, or the light falling through the reception front lens onto the converter arrangement, arranged in the latter case laterally with respect to the optical axis of the receiver front lens, and comprising a signal processing circuit (38, 39) connected to the converter arrangement,
characterized in that
provision is made for means (21, 23, 29, 31, 40) for fixing the deflection mirror (14) in a selectable pivoting position, and the photoelectric converter arrangement (15) comprises two photo converter (45) which are arranged one behind the other along an angle range swept by the receiver beam on pivoting the deflection mirror and are respectively connected to an input of a differential amplifier (38) included in the signal processing circuit; and in that the deflection mirror is fixed in an pivotal position in which the output signal of the differential amplifier
(i) has a predetermined amplitude of a first polarity if the article is placed within the maximal distance (A1), or
(ii) is equal to zero if the article is placed in a limit distance (A) beyond the maximal distance (A1), or
(iii) takes a polarity opposite to the first polarity if the article is placed beyond the limit distance (A).

2. A light sensor in accordance with claim 1, characterized in that the differential amplifier is connected to a processing circuit (39) which has a response threshold such that a presence signal is first transmitted when the signal which has the right sign and which appears at the output of the differential amplifier (38) is significantly distinguished from zero.

3. A light sensor in accordance with claim 1, characterized in that said transmitting beam (16) is of fixed direction relative to said housing, the transmitted beam (16) emerging from said housing (19) perpendicular to the wall (18) containing the front transmitter lens (17).

4. A light sensor in accordance with one of the preceding claims, characterized in that the light source (20) is a luminescent diode, and is arranged in the focal plane of the front transmitter lens (17), and in that the receiver (15) is arranged in the focal plane of the front receiving lens (12).

5. A light sensor in accordance with one of the preceding claims, characterized in that the axis of rotation (13) of the deflecting mirror (14) extends perpendicular to the plane defined by the received beam and the transmitted beam (11, 16).

6. A light sensor in accordance with one of the preceding claims, characterized in that the photoelectric converter arrangement (15) is arranged on the side of the deflecting mirror (14) remote from the light source (20).

7. A light sensor in accordance with one of the preceding claims, characterized in that the deflecting mirror (14) has a pivotal range restricted to 20° to 30°.

8. A light sensor in accordance with one of the preceding claims, characterized in that the deflecting mirror (14) is adjustable via a worm gear drive (23, 24).

9. A light sensor in accordance with claim 8, characterized in that the deflecting mirror (14) is mounted on an toothed segment (21) coaxial to the axis of rotation (13), and is rotatably mounted in the housing (19) via two lateral spigots (22).

10. A light sensor in accordance with claim 9, characterized in that the toothed segment (21) is connected with the deflecting mirror (14) via a resiliently biased hoop (23) in such a way that the spigots (22) are pressed by the worm (24) against the mount (43).

11. A light sensor in accordance with one of the claims 9 or 10, characterized in that the toothed segment (21) lies on the side of the axis of rotation (13) which faces the light source (20).

12. A light sensor in accordance with claim 11, characterized in that the worm (24) is arranged between the axis of rotation (13) and the light source (20), with the worm's axis of rotation extending parallel to the optical axes of the front lenses (12, 17).

13. A light sensor in accordance with claim 12, characterized in that the worm (24) is arranged on a worm shaft (26) which is rotatably journalled in the housing (19), the worm shaft (26) having an actuating knob (29) which can be rotated through an opening (27) in the rear wall (28) of the housing (19).

14. A light sensor in accordance with claim 13, characterized in that a ring seal (31) is clampingly arranged between the peripheral flange (30) of the worm shaft (26) and the inner surface of the rear wall (28).

15. A light sensor in accordance with one of the claims 8 to 14, characterized in that the worm (24) has between one and two turns; and in that the end surfaces (32) which project radially from the worm shaft (26) cooperate with counter-surfaces (33) provided at the toothed region of the toothed segment (21) to limit the angle of pivoting of the toothed segment (21).

16. A light sensor in accordance with one of the claims 8 to 15, characterized in that the turns of the worm (24) have a sloped surface (34) in the two end regions in peripheral direction and towards the end, in such a way that on abutment of the associated end surface (32) against the counter-surface (33), and on the application of a larger torque to the worm shaft (26) which would give rise to danger of damage, the worm (24) can snap in the region of the relevant end surface (32) over the outer edge of the counter-surface (33) whereupon the worm (24) rotates without rotating the toothed segment (21) until it falls into the first adjacent tooth gap (35 or 37).

17. A light sensor in accordance with one of the claims 8 to 16, characterized in that the pitch angle of the worm (24) lies between 4 and 6° and is preferably 5°, and in that the toothed segment (21) has three adjacent toothed gaps (35, 36, 37).

## Revendications

1. Détecteur lumineux sensible à la distance, destiné à établir la présence d'un objet (44) à l'intérieur d'une distance maximale (A1) du détecteur lumineux, comprenant un boîtier (19) dans lequel sont agencés l'un à côté de l'autre un émetteur lumineux incluant une source lumineuse (20) fixe par rapport au boîtier et une lentille frontale d'émission (17), et un récepteur de lumière incluant un transformateur photoélectrique (15) fixe par rapport au boîtier et une lentille frontale de réception (12) fixe par rapport au boîtier, de telle manière qu'un rayon lumineux (16) émis en faisceau par l'émetteur lumineux soit réfléchi vers le récepteur de lumière sous la forme d'un rayon de réception (11) limité étroitement angulairement si un objet se trouve dans le rayon émis, comprenant un miroir de renvoi (14) basculant autour d'un axe (13), agencé dans le boîtier soit devant la lentille frontale d'émission soit derrière la lentille frontale de réception, lequel miroir renvoie vers la lentille frontale d'émission la lumière de la source lumineuse, qui est agencée dans le premier cas latéralement par rapport à l'axe optique de la lentille frontale d'émission, ou qui renvoie sur le transformateur la lumière qui tombe à travers la lentille de réception, le transformateur étant placé dans le dernier cas latéralement par rapport à l'axe optique de la lentille frontale de réception, et comprenant un circuit de traitement de signal (38, 39) connecté au transformateur,
caractérisé en ce qu'il est prévu des moyens (21, 23, 29, 31, 40) pour fixer le miroir de renvoi (14) dans une position de basculement sélectionnable, et en ce que le transformateur photoélectrique (15) comprend deux phototransformateurs (45) qui sont agencés l'un derrière l'autre suivant une plage angulaire parcourue par le rayon de réception lors du basculement du miroir de renvoi et sont respectivement reliés à une entrée d'un amplificateur différentiel (38) inclus dans le circuit de traitement de signal, et en ce que le miroir de renvoi est fixé en une position pour laquelle le signal de sortie de l'amplificateur différentiel

    (i) a une amplitude prédéterminée d'une première polarité lorsque l'objet se trouve à l'intérieur de la distance maximale (A1), ou
    (ii) est égal à zéro lorsque l'objet se trouve à l'intérieur d'une distance limite (A) située au delà de la distance maximale, ou
    (iii) prend une polarité contraire à la première polarité lorsque l'objet se trouve au delà de la distance limite (A).

2. Détecteur lumineux selon la revendication 1, caractérisé en ce que l'amplificateur différentiel (38) est connecté à un circuit d'évaluation (39) qui comprend un seuil de réponse, de telle sorte qu'un signal de présence est produit seulement lorsque le signal présent à la sortie de l'amplificateur différentiel (38) et présentant le signe correct est nettement différent de zéro.

3. Détecteur lumineux selon la revendication 1, caractérisé en ce que le rayon émis (16) est fixe, le rayon émis (16) sortant du boîtier (19) perpendiculairement à la paroi (18) qui contient la lentille frontale d'émission (17).

4. Détecteur lumineux selon l'une des revendications précédentes, caractérisé en ce que la source lumineuse (20) est une diode luminescente et est agencée dans le plan focal de la lentille frontale d'émission (17) et le récepteur est agencé dans le plan focal de la lentille frontale de réception (12).

5. Détecteur lumineux selon l'une des revendications précédentes, caractérisé en ce que l'axe de rotation (13) du miroir de renvoi (14) est perpendiculaire au plan défini par le rayon émis et le rayon de réception (11, 16).

6. Détecteur lumineux selon l'une des revendications précédentes, caractérisé en ce que le transformateur photoélectrique (15) est agencé sur le côté du miroir de renvoi (14) éloigné de la source lumineuse (20).

7. Détecteur lumineux selon l'une des revendications précédentes, caractérisé en ce que le miroir de renvoi (14) a une plage de basculement limitée à un angle de 20 à 30°.

8. Détecteur lumineux selon l'une des revendications précédentes, caractérisé en ce que le miroir de renvoi (14) est déplaçable au moyen d'un mécanisme à roue dentée et vis tangente (23, 24).

9. Détecteur lumineux selon la revendication 8, caractérisé en ce que le miroir de renvoi (14) est monté sur un segment de roue dentée (21) coaxial à l'axe de rotation (13) et est monté à rotation dans le boîtier (19) par deux têtons latéraux (22).

10. Détecteur lumineux selon la revendication 9, caractérisé en ce que le segment de roue dentée (21) est relié au miroir de renvoi (14) au moyen d'un bras élastiquement préchargé, de telle sorte que les têtons (22) sont repoussés par la vis tangente (24) contre le palier (43).

11. Détecteur lumineux selon l'une des revendications 8 ou 10, caractérisé en ce que le segment de roue dentée (21) est disposé sur le côté de l'axe de rotation (13) dirigé vers la source lumineuse (20).

12. Détecteur lumineux selon la revendication 11, caractérisé en ce que la vis tangente (24) est agencée entre l'axe de rotation (13) et la source lumineuse (20), avec l'axe de rotation de la vis tangente (25) s'étendant parallèlement à l'axe optique des lentilles frontales (12, 17).

13. Détecteur lumineux selon la revendication 12, caractérisé en ce que la vis tangente (24) est agencée sur un arbre (26) de vis tangente monté rotatif dans le boîtier (19), cet arbre comportant un bouton d'actionnement (29) qui peut être tourné à travers une ouverture (27) de la paroi arrière (28) du boîtier (19).

14. Détecteur lumineux selon la revendication 13, caractérisé en ce qu'un joint annulaire (31) est coincé entre le flasque périphérique (30) de l'arbre (26) de vis tangente et la surface interne de la paroi arrière (28).

15. Détecteur lumineux selon l'une des revendications 8 à 14, caractérisé en ce que la vis tangente (24) comporte entre une et deux spires, et en ce que les surfaces d'extrémité (32) dépassant radialement de l'arbre (26) de vis tangente coopèrent avec des contre-surfaces (33) prévues à la suite de la zone dentée du segment denté (21), pour limiter l'angle de pivotement du segment de roue dentée (21).

16. Détecteur lumineux selon l'une des revendications 8 à 15, caractérisé en ce que les spires de la vis tangente (24) comportent des chanfreins (34) vers l'extrémité dans les deux zones d'extrémité en direction périphérique, de telle sorte que lorsque la surface d'extrémité (32) associée vient en butée contre la contre surface (33) et par l'utilisation sur l'arbre (26) de vis tangente d'un couple de rotation augmenté et entraînant le risque de détérioration, la vis tangente (24) peut sauter élastiquement par-dessus le bord extérieur de la contre-surface (33) dans la région de la surface d'extrémité (32) concernée, suite à quoi la vis tangente (24) tourne sans rotation du segment denté (21), jusqu'à ce qu'elle tombe dans le premier intervalle interdentaire voisin (35 ou 37).

17. Détecteur lumineux selon l'une des revendications 8 à 16, caractérisé en ce que l'angle de progression de la vis tangente (24) est compris entre 4° et 6° et est de préférence environ 5°, et en ce que le segment denté (21) comporte trois intervalles interdentaires voisins (35, 36, 37).

FIG. 1

FIG. 2

FIG. 3